# EUROPEAN PATENT APPLICATION

(11) **EP 3 989 027 A1**
(43) Date of publication of application: **27.04.2022**
(21) Application number: 19934028.2
(22) Date of filing: 13.12.2019
(51) Int. Cl.: G05D 1/02

(54) **ROBOT CONTROL METHOD AND APPARATUS, AND VISUAL DEVICE CONTROL METHOD AND APPARATUS**

(30) Priority: 21.06.2019 CN 201910545156
(71) Applicant: Zhuhai Gree Intelligent Equipment Co., Ltd, Zhuhai, Guangdong 519070 (CN); Gree Electric Appliances, Inc. of Zhuhai, Zhuhai, Guangdong 519070 (CN)
(72) Inventor: HUANG, Xia, Zhuhai, Guangdong 519070 (CN); GAO, Xiaoyun, Zhuhai, Guangdong 519070 (CN); ZHONG, Wentao, Zhuhai, Guangdong 519070 (CN); ZHANG, Zhibo, Zhuhai, Guangdong 519070 (CN); QIN, Xichun, Zhuhai, Guangdong 519070 (CN)
(74) Representative: Zacco GmbH
(86) International application number: PCT/CN2019/125350
(87) International publication number: WO 2020/253163

(57) **Abstract**

Provided are a method for controlling robot and device, and a method for controlling visual device and device. Herein, the method for controlling robot may include: determining a device type and a communication protocol format of a visual device to be connected (S102), establishing a communication connection with the visual device on the basis of the device type and the communication protocol format (S104), receiving a protocol message of the visual device, herein, the protocol message may include target coordinate information (S106), and controlling a preset robot to move to a target position indicated by the target coordinate information (S108).

## Description

### Cross-Reference to Related Application

The disclosure claims priority to Chinese Patent Application No. 201910545156.0, filed to the China National Intellectual Property Administration on June 21, 2019 and entitled "Method for Controlling Robot and Device, and Method for controlling visual device and Device", the disclosure of which is hereby incorporated by reference in its entirety.

### Technical Field

The disclosure relates to the technical field of device control, and in particular to a method for controlling robot and device, and a method for controlling visual device and device.

### Background

In the related art, many factories or process production plants may use a robot to realize automatic control, or realize automatic transport or production. During a process of using the robot, a visual device is often needed to take photos to satisfy production of different factories or processes in an auxiliary manner. However, multiple types of visual devices compatible with multiple communication protocols are often needed to work when the robot works because communication functions and communication protocols compatible with different visual devices are different. During communication, a communication interface is converted manually many times or the communication protocols are loaded frequently, thereby leading to the failure of the robot to rapidly analyze a target position needing to achieve, and finally leading to the failure of the production pace to adapt to the actual production speed of a device.

In allusion to the abovementioned problem, no effective solution has been proposed yet at present.

### Summary

The embodiments of the disclosure provide a method for controlling robot and device, and a method for controlling visual device and device, as to at least solve the technical problem that a moving speed of a robot may not adapt to production pace because communication protocols compatible with different visual devices have the diversity in the related art.

According to one aspect of the embodiments of the disclosure, a method for controlling robot is provided, which is applied to a preset robot. The method may include: a device type and a communication protocol format of a visual device to be connected are determined, a communication connection with the visual device is established on the basis of the device type and the communication protocol format, a protocol message of the visual device is received, herein, the protocol message may include target coordinate information, and the preset robot is controlled to move to a target position indicated by the target coordinate information.

Optionally, the step that the communication connection with the visual device is established on the basis of the device type and the communication protocol format may include: a device model number of at least one visual device to be connected is determined on the basis of the device type, a communication request sent by the at least one visual device is received on the basis of the communication protocol format and the device model number, and the communication connection with the visual device is established according to the communication request.

Optionally, after the step that the protocol message of the visual device is received, the control method may further include: a character string in the protocol message is extracted, herein, the character string is the one corresponding to a coordinate of motion acquired after the visual device takes at least one image and processes the image, the character string is converted to coordinate data on the basis of the communication protocol format, and a target position that the preset robot needs to achieve and a motion path are determined on the basis of the coordinate data, herein, the motion path is used for indicating that the preset robot moves to the target position.

Optionally, the control method may further include: a moving speed of the preset robot is controlled to be consistent with a moving speed of a last robot of a production line after the protocol message of the visual device is received, as to control working pace of the preset robot to be consistent with production pace of the production line, herein, the working pace is used for indicating that a working speed of the preset robot satisfies a preset working speed.

Optionally, the device type may include: at least one of: a 2-dimensional (2D) device type and a 3-dimensional (3D) device type, and the communication protocol format may include at least one of a: a 2D visual communication protocol format and a 3D visual communication protocol format.

Optionally, the preset robot may include at least one of the following: a six-axis robot and a four-axis palletizing robot.

According to another aspect of the embodiments of the disclosure, a method for controlling visual device is further provided, which is applied to at least one visual device that may take photos. The control method may include: a communication protocol format is determined, a communication connection with a preset robot is established on the basis of the communication protocol format, at least one image is taken, target coordinate information is determined on the basis of the image, the target coordinate information is converted to acquire a coordinate character string, and a protocol message including the coordinate character string is sent to the preset robot, herein, the preset robot moves to a target position indicated by the target coordinate information after analyzing the protocol message.

Optionally, the communication protocol format may include: at least one of: a 2-dimensional (2D) visual communication protocol format and a 3-dimensional (3D) visual communication protocol format.

According to another aspect of the embodiments of the disclosure, a visual system control method is further provided. A visual system may include: at least a preset robot and at least a visual device. The preset robot is compatible with multiple communication protocol formats. The control method may include: the preset robot determines a device type and a communication protocol format of the visual device, the preset robot establishes a communication connection with the at least one visual device on the basis of the device type and the communication protocol format, the at least one visual device takes an image and analyzes the image, to acquire target coordinate information, the at least one visual device converts the target coordinate information to acquire a character string and sends a protocol message including the character string to the preset robot, the preset robot receives the protocol message of the at least one visual device, and the preset robot analyzes the protocol message on the basis of the communication protocol format, to acquire the target coordinate information and moves to a target position indicated by the target coordinate information.

According to another aspect of the embodiments of the disclosure, a device for controlling robot is further provided, which is applied to a preset robot. The device for controlling robot may include: a first determination unit, configured to determine a device type and a communication protocol format of a visual device to be connected, a first communication establishment unit, configured to establish a communication connection with the visual device on the basis of the device type and the communication protocol format, a first receiving unit, configured to receive a protocol message of the visual device, herein, the protocol message may include target coordinate information, and a first control unit, configured to control the preset robot to move to a target position indicated by the target coordinate information.

Optionally, the first communication establishment unit may include: a first determination module, configured to determine a device model number of at least one visual device to be connected on the basis of the device type, a first receiving module, configured to receive a communication request sent by the at least one visual device on the basis of the communication protocol format and the device model number, and a first communication establishment module, configured to establish the communication connection with the visual device according to the communication request.

Optionally, the device for controlling robot may further include: an extraction unit, configured to extract a character string in the protocol message after the protocol message of the visual device is received, herein, the character string is the one corresponding to a coordinate of motion acquired after the visual device takes at least one image and processes the image, a first conversion module, configured to convert the character string to coordinate data on the basis of the communication protocol format, and a second determination module, configured to determine a target position that the preset robot needs to achieve and a motion path on the basis of the coordinate data, herein, the motion path is used for indicating that the preset robot moves to the target position.

Optionally, the device for controlling robot may further include: a first control module, configured to control a moving speed of the preset robot to be consistent with the one of a last robot of a production line after the protocol message of the visual device is received, as to control working pace of the preset robot to be consistent with production pace of the production line, herein, the working pace is used for indicating that a working speed of the preset robot satisfies a preset working speed.

Optionally, the device type may include at least one of: a 2-dimensional (2D) device type and a 3-dimensional (3D) device type, and the communication protocol format may include at least one of: a 2D visual communication protocol format and a 3D visual communication protocol format.

Optionally, the preset robot may include at least one of the following: a six-axis robot and a four-axis palletizing robot.

According to another aspect of the embodiments of the disclosure, a device for controlling visual device is further provided, which is applied to at least one visual device that may take photos. The control device may include: a second determination unit, configured to determine a communication protocol format, a second communication establishment unit, configured to establish a communication connection with a preset robot on the basis of the communication protocol format, a third determination unit, configured to take at least one image, and determine target coordinate information on the basis of the image, a first conversion unit, configured to convert the target coordinate information to acquire a coordinate character string, a first sending unit, configured to send a protocol message including the coordinate character string to the preset robot, herein, the preset robot moves to a target position indicated by the target coordinate information after analyzing the protocol message.

Optionally, the communication protocol format may include at least one of: a 2D visual communication protocol format and a 3D visual communication protocol format.

According to another aspect of the embodiments of the disclosure, a visual system control device is further provided. A visual system may include: at least a preset robot and at least one visual device. The preset robot is compatible with multiple communication protocol formats. The control device may include: a fourth determination unit, configured to determine, by the preset robot, a device type and a communication protocol format of the visual device, a third communication establishment unit, configured to establish, by the preset robot, a communication connection with the at least one visual device on the basis of the device type and the communication protocol format of the visual device, an analyzing unit, configured to take, by the at least one visual device, an image and analyze the image, to acquire target coordinate information, a second sending unit, configured to convert, by the at least one visual device, the target coordinate information to acquire a character string and send a protocol message including the character string to the preset robot, a second receiving unit, configured to receive, by the preset robot, the protocol message of the at least one visual device, and a moving unit, configured to analyze, by the preset robot, the protocol message on the basis of the communication protocol format, to acquire the target coordinate information and move to a target position indicated by the target coordinate information.

According to another aspect of the embodiments of the disclosure, a robot is further provided, including a processor, and a memory, configured to store an executable instruction of the processor, herein, the processor is configured to execute the method for controlling robot as mentioned in any of the above by executing the executable instruction.

In the embodiments of the disclosure, a device type and a communication protocol format of a visual device to be connected are determined, then a communication connection with the visual device is established on the basis of the device type and the communication protocol format, a protocol message of the visual device is received, herein, the protocol message may include target coordinate information, and finally a preset robot may be controlled to move to a target position indicated by the target coordinate information. In the embodiment, the preset robot is compatible with the communication protocols of multiple visual devices, in this way a coordinate in the protocol message is rapidly analyzed, communication time and data processing time of the robot and the visual device are shortened, and accordingly the robot moves to the target position timely after rapidly analyzing the coordinate information, as to make motion of the robot be in line with production pace. Thus, the technical problem that a moving speed of a robot may not adapt to the production pace because communication protocols compatible with different visual devices have the diversity in the related art is solved.

### Brief Description of the Drawings

The accompanying drawings described herein are used to provide a further understanding of the disclosure, and constitute a part of the disclosure, and the exemplary embodiments of the disclosure and the description thereof are used to explain the disclosure, but do not constitute improper limitations to the disclosure. In the drawings:
Fig. 1 is a flow chart of an optional method for controlling robot according to an embodiment of the disclosure.
Fig. 2 is a flow chart of a method for controlling visual device according to an embodiment of the disclosure.
Fig. 3 is a flow chart of an optional visual system control method according to an embodiment of the disclosure.
Fig. 4 is a schematic diagram of an optional device for controlling robot according to an embodiment of the disclosure.
Fig. 5 is a schematic diagram of a device for controlling visual device according to an embodiment of the disclosure.
Fig. 6 is a schematic diagram of an optional visual system control device according to an embodiment of the disclosure.

### Detailed Description of the Embodiments

In order to make the solutions of the disclosure better understood by those skilled in the art, the technical solutions in the embodiments of the disclosure will be clearly and completely described below in combination with the drawings in the embodiments of the disclosure. It is apparent that the described embodiments are not all embodiments but part of embodiments of the disclosure. All other embodiments obtained by those of ordinary skill in the art on the basis of the embodiments in the disclosure without creative work shall fall within the scope of protection of the disclosure.

It is to be noted that terms "first", "second" and the like in the description, claims and the abovementioned drawings of the disclosure are used for distinguishing similar objects rather than describing a specific sequence or a precedence order. It should be understood that the data used in such a way may be exchanged where appropriate, in order that the embodiments of the disclosure described here can be implemented in a sequence other than sequences graphically shown or described here. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

According to the embodiments of the disclosure, an embodiment of a method for controlling robot is provided. It is to be noted that steps shown in a flow chart of a drawing may be executed in a computer system, for example, of a group of computer-executable instructions. In addition, although a logic sequence is shown in the flow chart, the shown or described steps may be executed in a sequence different from that described here in some circumstances.

The method for controlling robot in the embodiment of the disclosure may be applied to a variety of preset robots. Optionally, the preset robot may include, but is not limited to: a six-axis robot and a four-axis palletizing robot. The preset robot may be an industrial production robot, an art ware production robot, a household robot, a service robot and the like, and may be selected voluntarily according to types and model numbers of various kinds of robots.

The robot in the embodiment of the disclosure may be compatible with multiple communication protocols (for example, compatible with 2D and 3D visual communication protocols), and may realize coordinate conversion of the communication protocol, as to adapt to different visual devices. A coordinate is analyzed rapidly, in this way communication time and data processing time of the robot and a visual camera are shortened, and it is in line with production pace. The embodiment of the disclosure is described below through a specific control method.

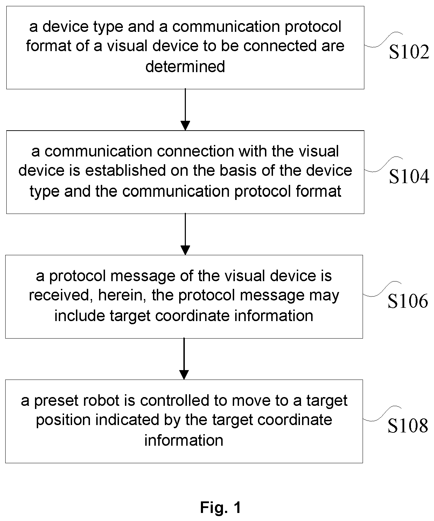

Fig. 1 is a flow chart of an optional method for controlling robot according to an embodiment of the disclosure. As shown in Fig. 1, the method may include the following steps.

Step S102, a device type and a communication protocol format of a visual device to be connected are determined.

Step S104, a communication connection with the visual device is established on the basis of the device type and the communication protocol format.

Step S106, a protocol message of the visual device is received, herein, the protocol message may include target coordinate information.

Step S108, a preset robot is controlled to move to a target position indicated by the target coordinate information.

Through the abovementioned steps, the device type and the communication protocol format of the visual device to be connected are determined, the communication connection with the visual device is established on the basis of the device type and the communication protocol format, the protocol message of the visual device is received, herein, the protocol message may include target coordinate information, and finally the preset robot is controlled to move to the target position indicated by the target coordinate information. In the embodiment, the preset robot is compatible with the communication protocols of multiple visual devices, in this way a coordinate in the protocol message is rapidly analyzed, communication time and data processing time of the robot and the visual device are shortened, and accordingly the robot moves to the target position timely after rapidly analyzing the coordinate information, as to make motion of the robot be in line with the production pace. Thus, the technical problem that a moving speed of the robot may not adapt to the production pace because communication protocols compatible with different visual devices have diversity in the related art is solved.

As an optional embodiment of the disclosure, multithreading support is used in the control method adopted by the abovementioned preset robot, and thus multiple types of communication protocols may be satisfied at the same time, and diversified communication protocols may be analyzed.

The embodiment of the disclosure is described below in combination with detailed contents in each step.

Before the preset robot works, the visual device connecting with the preset robot may be selected, including the device type of the visual device and the communication protocol required to implement communication.

Step S102, the device type and the communication protocol format of the visual device to be connected is determined.

The visual device to be connected may include, but is not limited to: a visual camera, a visual camera, a visual image shooting device and the like. Number and positions of the visual devices to be configured may be adaptively configured according to number of the robots and stations on a production line, and will not be limited specifically in the disclosure. The visual device may take an image and a video. When selecting the device type (for example, 2D, 3D cameras) of the visual device, please pay attention to a focal length, a height of an object, a resolution when taking the image, a central point, and pixels of the image taken by the visual device, and the like respectively. Moreover, the luminance of the station on each production line and the like may be taken into account as well, as to select a suitable visual device.

Optionally, a communication module may be mounted in the preset robot and the visual device in the embodiment of the disclosure, and the communication module may be selected according to an information transmission distance and an obstacle during information transmission.

In an optional embodiment of the disclosure, the device type of the visual device to be connected may include at least one of: a 2-dimensional (2D) device type and a 3-dimensional (3D) device type, and the communication protocol format may include at least one of: a 2D visual communication protocol format and a 3D visual communication protocol format. For example, a six-axis robot may be compatible with 2D or 3D visual processing, and compatible with various testing processes, while a four-axis palletizing robot may be compatible with 3D visual processing, and compatible with accurate unmanned rapid sorting.

While the abovementioned communication protocol format mainly refers to a format of the protocol message. The communication protocol formats compatible with different communication protocols are different. A visual communication protocol may be determined by accessing to the communication protocol format, in this way a way of establishing network communication is determined.

After the device type of the visual device to be connected is selected and the communication protocol format is determined, the preset robot may be controlled to establish communication with the visual device.

Step S104, the communication connection with the visual device is established on the basis of the device type and the communication protocol format.

In the embodiment of the disclosure, the preset robot may establish the communication connection with the visual devices of multiple communication types, and receive the protocol messages.

In an optional embodiment of the disclosure, the step that the communication connection with the visual device is established on the basis of the device type and the communication protocol format may include: a device model number of at least one visual device to be connected is determined on the basis of the device type, a communication request sent by the at least one visual device is received on the basis of the communication protocol format and the device type, and the communication connection with the visual device is established according to the communication request.

After the communication connection with the preset robot is established, the visual device may judge a visual signal, and the visual camera may take photos for one time and/or circularly, process the image (including, but not limited to: binarization processing, color dimension reduction and line extraction) for the taken image, and determine target coordinate data on the basis of an image processing result, herein, the target coordinate data is used for indicating a position to which the preset robot needs to move. When the visual device determines the target coordinate data, the target coordinate data may be converted according to the communication protocol format, to form the protocol message, and then the protocol message is sent to the preset robot.

As an optional embodiment of the disclosure, the visual device may be compatible with multiple times of photo taking, and may form multiple protocol messages.

Step S106, the protocol message of the visual device is received, herein, the protocol message may include the target coordinate information.

Namely, the preset robot may store the protocol message by receiving the protocol message of the visual device.

As an optional embodiment of the disclosure, after the protocol message of the visual device is received, the control method may further include: a character string in the protocol message is extracted, herein, the character string is the one corresponding to a coordinate of motion acquired when the visual device takes at least one image and processes the image, the character string is converted to coordinate data on the basis of the communication protocol format, and a target position that the preset robot needs to achieve and a motion path are determined on the basis of the coordinate data, herein, the motion path is used for indicating that the preset robot moves to the target position.

The preset robot extracts the character string in the protocol message, and converts the character string to the coordinate data according to the communication protocol format. The coordinate data indicates the target position that the preset robot needs to achieve.

Optionally, the control method may further include: a moving speed of the preset robot is controlled to be consistent with a moving speed of a last robot of a production line after the protocol message of the visual device is received, as to control working pace of the preset robot to be consistent with the production pace of the production line, herein, the working pace is used for indicating that a working speed of the preset robot satisfies a preset working speed.

The preset robot in the embodiment of the disclosure may be compatible with the communication protocols of multiple communication devices, and may analyze the protocol message rapidly, to acquire the coordinate data. Communication time and data processing time of the preset robot and the visual device are shortened, in this way the preset robot moves to the target position timely after rapidly analyzing, and it is in line with the production pace.

As an optional embodiment of the disclosure, the preset robot may store the protocol message many times, implement the coordinate conversion many times and rapidly analyze the coordinate data, in this way the production pace is satisfied. For example, the preset robot is realized to be compatible with accurate unmanned rapid sorting.

Step S108, the preset robot is controlled to move to the target position indicated by the target coordinate information.

Namely, after the preset robot completes the coordinate conversion, and acquires a current position of the robot and the target coordinate information of the target position to which the preset robot needs to move, the preset robot may be controlled to move to the target position indicated by the target coordinate information, in this way production of the production line is completed, and a production speed is improved.

In the abovementioned embodiment, the preset robot may be compatible with multiple communication protocols. After the communication connection with the visual device is established, the visual device may take the image and process the image, to acquire the coordinate position. Then the visual device may send the protocol message including the coordinate position to the preset robot. The preset robot receives the protocol message, and rapidly analyzes the protocol message (the robot may realize 2D and 3D multi-protocol analysis) according to the communication protocol format, to acquire the target coordinate information. In this way, communication processing time of the robot and the visual device is shortened, and it is in line with the production pace. In addition, the production pace is always kept stable with an actual production pace on the production line, and accordingly stable production is realized.

The disclosure is described below through another optional embodiment.

### Embodiment 2

A method for controlling visual device in the embodiment of the disclosure may be applied to at least one visual device that may take photos. The visual device may be provided with a processor therein, and a program operating on the processor may be the one corresponding to the following method for controlling visual device.

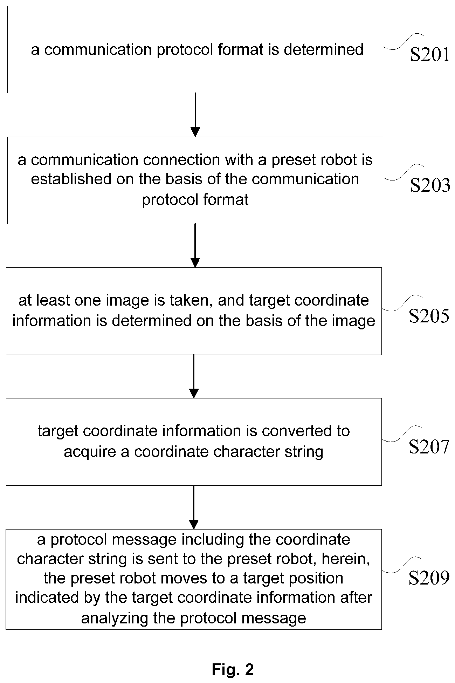

Fig. 2 is a flow chart of a method for controlling visual device according to an embodiment of the disclosure. As shown in Fig. 2, the control method may include the following steps.

Step S201, a communication protocol format is determined.

Step S203, a communication connection with a preset robot is established on the basis of the communication protocol format.

Step S205, at least one image is taken, and target coordinate information is determined on the basis of the image.

Step S207, target coordinate information is converted to acquire a coordinate character string.

Step S209, a protocol message including the coordinate character string is sent to the preset robot, herein, the preset robot moves to a target position indicated by the target coordinate information after analyzing the protocol message.

Through the abovementioned steps, the visual device may determine the communication protocol format, establish the communication connection with the preset robot on the basis of the communication protocol format, take at least one image, determine the target coordinate information on the basis of the image, convert the target coordinate information to acquire the coordinate character string, and finally send the protocol message including the coordinate character string to the preset robot, herein, the preset robot moves to the target position indicated by the target coordinate information after analyzing the protocol message. In the embodiment, the visual device may acquire the target coordinate information by taking the image and processing the image, and send the protocol message including the target coordinate information to the preset robot. The preset robot may be compatible with communication protocols of multiple visual devices, in this way a coordinate in the protocol message is rapidly analyzed, and communication time and data processing time of the robot and the visual device are shortened. Accordingly, the robot moves to the target position timely after rapidly analyzing the coordinate information, as to make motion of the robot be in line with production pace. Thus, the technical problem that a moving speed of a robot may not adapt to the production pace because communication protocols compatible with different visual devices have the diversity in the related art is solved.

In the embodiment of the disclosure, the communication protocol format may include at least one of: a 2D visual communication protocol format and a 3D visual communication protocol format.

The disclosure is described below through another optional embodiment.

### Embodiment 3

A visual system in the following embodiment of the disclosure may include: at least a preset robot and at least one visual device, and the preset robot is compatible with multiple communication protocol formats.

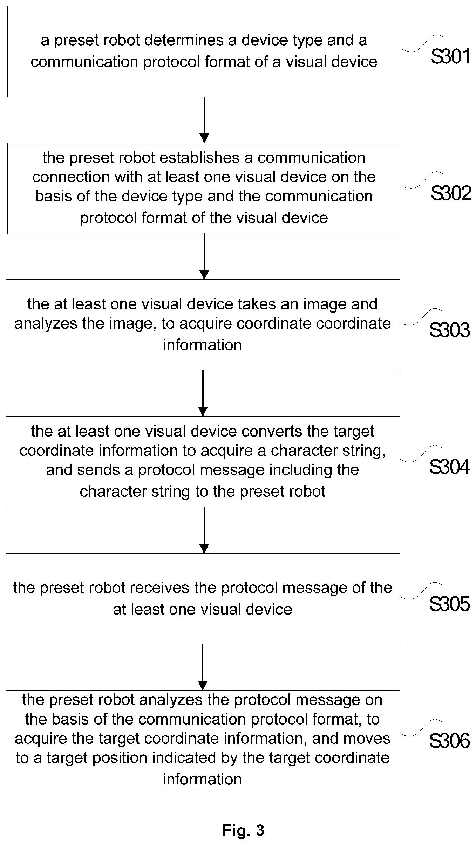

Fig. 3 is a flow chart of an optional visual system control method according to an embodiment of the disclosure. As shown in Fig. 3, the control method may include the following steps.

Step S301, a preset robot determines a device type and a communication protocol format of a visual device.

Step S302, the preset robot establishes a communication connection with at least one visual device on the basis of the device type and the communication protocol format of the visual device.

Step S303, the at least one visual device takes an image and analyzes the image, to acquire coordinate coordinate information.

Step S304, the at least one visual device converts the target coordinate information to acquire a character string, and sends a protocol message including the character string to the preset robot.

Step S305, the preset robot receives the protocol message of the at least one visual device.

Step S306, the preset robot analyzes the protocol message on the basis of the communication protocol format, to acquire the target coordinate information, and moves to a target position indicated by the target coordinate information.

In the abovementioned visual system control method, the robot may establish the communication connection with the visual device on the basis of the determined type and the communication protocol format of the visual device. The visual device may take photos for one time and/or for many times circularly, and process the image, to acquire the target coordinate information. Then, the visual device may convert the target coordinate information to the character string according to the communication protocol format, and send the protocol message including the character string to the preset robot through a network. The preset robot may rapidly analyze the protocol message according to the communication protocol format, to acquire the coordinate information, and move to the target position indicated by the coordinate information. In a visual system, the robot may be compatible with multiple communication protocol formats. After taking the images and analyzing them to acquire coordinate data, different visual devices may send the protocol messages, while the robot may analyze the messages through the corresponding communication protocol formats. The coordinate information is acquired by rapidly analyzing the message, in this way communication time and data processing time of the robot and the visual device are shortened, it is in line with production pace, and the technical problem that a moving speed of a robot may not adapt to the production pace because communication protocols compatible with the different visual devices have the diversity in the related art is solved.

The abovementioned step that the at least one visual device takes the image and analyzes the image to acquire the target coordinate information may include: the image is subjected to noise removal, filtering, restoration and binarization processing, and a coordinate indicated in the image is analyzed, to acquire the target coordinate information.

The protocol message compatible with the robot in the visual system may include, but is not limited to, a 2-dimensional (2D) visual protocol message and a 3-dimensional (3D) visual protocol message, and different communication protocols are compatible. The robot may further realize customization of the communication protocol and analysis of the protocol, implement synchronous multi-position multi-coordinate conversion, and satisfy all types of different visual devices to implement the coordinate conversion. In addition, the robot in the embodiment of the disclosure, through rapidly analyzing the protocol message, may solve the problem that the pace is inconsistent, namely, the robot may directly and rapidly analyze to acquire coordinate values at which the photos are taken many times, in this way program edition on a demonstrator for coordinate conversion step by step is avoided, and the production stability is improved.

### Embodiment 4

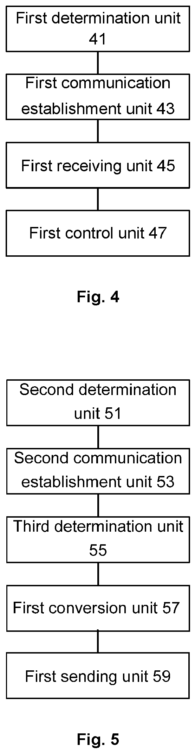

Fig. 4 is a schematic diagram of an optional device for controlling robot according to an embodiment of the disclosure. The device for controlling robot is applied to a preset robot. As shown in Fig. 4, the control device may include: a first determination unit 41, a first communication establishment unit 43, a first receiving unit 45 and a first control unit 47.

Herein, the first determination unit 41 is configured to determine a device type and a communication protocol format of a visual device to be connected.

The first communication establishment unit 43 is configured to establish a communication connection with the visual device on the basis of the device type and the communication protocol format.

The first receiving unit 45 is configured to receive a protocol message of the visual device, herein, the protocol message may include target coordinate information.

The first control unit 47 is configured to control the preset robot to move to a target position indicated by the target coordinate information.

The abovementioned device for controlling robot is characterized in that the device type and the communication protocol format of the visual device to be connected may be determined through the first determination unit 41, then the communication connection with the visual device may be established through the first communication establishment unit 43 on the basis of the device type and the communication protocol format, and the protocol message of the visual device may be received through the first receiving unit 45, herein, the protocol message may include the target coordinate information, and finally the preset robot may be controlled through the first control unit 47 to move to the target position indicated by the target coordinate information. In the embodiment, the preset robot is compatible with the communication protocols of multiple visual devices, in this way a coordinate in the protocol message is rapidly analyzed, communication time and data processing time of the robot and the visual device are shortened, and accordingly the robot moves to the target position timely after rapidly analyzing the coordinate information, as to make motion of the robot be in line with production pace. Thus, the technical problem that a moving speed of a robot may not adapt to the production pace because communication protocols compatible with different visual devices have the diversity in the related art is solved.

In the embodiment of the disclosure, the first communication establishment unit may include: a first determination module, configured to determine a device model number of at least one visual device to be connected on the basis of the device type, a first receiving module, configured to receive a communication request sent by the at least one visual device on the basis of the communication protocol format and the device model number, and a first communication establishment module, configured to establish the communication connection with the visual device according to the communication request.

As an optional embodiment of the disclosure, the device for controlling robot may further include: an extraction unit, configured to extract a character string in the protocol message after the protocol message of the visual device is received, herein, the character string is the one corresponding to a coordinate of motion acquired after the visual device takes at least one image and processes the image, a first conversion module, configured to convert the character string to coordinate data on the basis of the communication protocol format, and a second determination module, configured to determine a target position that the preset robot needs to achieve and a motion path on the basis of the coordinate data, herein, the motion path is used for indicating that the preset robot moves to the target position.

As an optional embodiment of the disclosure, the device for controlling robot may further include: a first control module, configured to control a moving speed of the preset robot to be consistent with the one of a last robot of a production line after the protocol message of the visual device is received, as to control working pace of the preset robot to be consistent with the production pace of the production line, herein, the working pace is used for indicating that a working speed of the preset robot satisfies a preset working speed.

Optionally, the device type may include at least one of: a 2-dimensional (2D) device type and a 3-dimensional (3D) device type, and the communication protocol format may include at least one of: a 2D visual communication protocol format and a 3D visual communication protocol format.

Optionally, the preset robot may include at least one of the following: a six-axis robot and a four-axis palletizing robot.

The abovementioned device for controlling robot may further include a processor and a memory. The first determination unit 41, the first communication establishment unit 43, the first receiving unit 45 and the first control unit 47 are stored in the memory as program units, and the processor executes the abovementioned program units stored in the memory to realize corresponding functions.

The abovementioned processor may include a core, and the core retrieves the corresponding program unit in the memory. One or more cores may be configured, and the preset robot is controlled to move to the target position indicated by the target coordinate information through adjusting parameters of the core.

The abovementioned memory may include a volatile memory, a Random Access Memory (RAM) and/or a nonvolatile memory and the like in a computer readable medium, for example, a Read-Only Memory (ROM) or a flash RAM. The memory may include at least one memory chip.

Fig. 5 is a schematic diagram of a device for controlling visual device according to an embodiment of the disclosure. The device for controlling visual device may be applied to at least one visual device that may take photos. As shown in Fig. 5, the control device may include: a second determination unit 51, a second communication establishment unit 53, a third determination unit 55, a first conversion unit 57 and a first sending unit 59.

Herein, the second determination unit 51 is configured to determine a communication protocol format.

The second communication establishment unit 53 is configured to establish a communication connection with a preset robot on the basis of the communication protocol format.

The third determination unit 55 is configured to take at least one image, and determine target coordinate information on the basis of the image.

The first conversion unit 57 is configured to convert the target coordinate information to acquire a coordinate character string.

The first sending unit 59 is configured to send a protocol message including the coordinate character string to the preset robot, herein, the preset robot moves to a target position indicated by the target coordinate information after analyzing the protocol message.

The abovementioned device for controlling visual device is characterized in that the communication protocol format may be determined by the second determination unit 51, the communication connection with the preset robot may be established by the second communication establishment unit 53 on the basis of the communication protocol format, the at least one image may be taken by the third determination unit 55, the target coordinate information is determined on the basis of the image, the target coordinate information may be converted by the first conversion unit 57 to acquire the coordinate character string, and finally the protocol message including the coordinate character string may be sent to the preset robot by the first sending unit 59, herein, the preset robot moves to the target position indicated by the target coordinate information after analyzing the protocol message. In the embodiment, the visual device may acquire the target coordinate information by taking the image and processing the image, and send the protocol message including the target coordinate information to the preset robot. The preset robot may be compatible with the communication protocols of multiple visual devices, in this way a coordinate in the protocol message is analyzed rapidly, communication time and data processing time of the robot and the visual device are shortened, and accordingly the robot moves to the target position timely after rapidly analyzing the coordinate information, as to make motion of the robot be in line with production pace. Thus, the technical problem that a moving speed of a robot may not adapt to the production pace because communication protocols compatible with different visual devices have the diversity in the related art is solved.

In the embodiment of the disclosure, the communication protocol format may include at least one of: a 2D visual communication protocol format and a 3D visual communication protocol format.

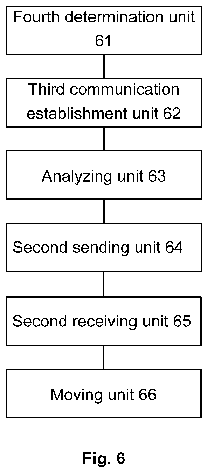

Fig. 6 is a schematic diagram of an optional visual system control device according to an embodiment of the disclosure. A visual system may include: at least a preset robot and at least one visual device. The preset robot is compatible with multiple communication protocol formats. As shown in Fig. 6, the control device may include: a fourth determination unit 61, a third communication establishment unit 62, an analyzing unit 63, a second sending unit 64, a second receiving unit 65 and a moving unit 66.

The fourth determination unit 61 is configured to determine, by the preset robot, a device type and a communication protocol format of the visual device.

The third communication establishment unit 62 is configured to establish, by the preset robot, a communication connection with the at least one visual device on the basis of the device type and the communication protocol format.

The analyzing unit 63 is configured to take, by the at least one visual device, an image and analyze the image, to acquire target coordinate information.

The second sending unit 64 is configured to convert, by the at least one visual device, the target coordinate information to acquire a character string, and send a protocol message including the character string to the preset robot.

The second receiving unit 65 is configured to receive, by the preset robot, the protocol message of the at least one visual device.

The moving unit 66 is configured to analyze, by the preset robot, the protocol message on the basis of the communication protocol format, to acquire the target coordinate information, and move to a target position indicated by the target coordinate information.

In the abovementioned visual system control method, the communication connection with the visual device may be established on the basis of the determined device type and the communication protocol format of the visual device. The visual device may take photos for one time and/or for many times circularly, and process the image, to acquire the target coordinate information. Then, the visual device may convert the target coordinate information to the character string according to the communication protocol format, and send the protocol message including the character string to the preset robot through a network. The preset robot may rapidly analyze the protocol message according to the communication protocol format, to acquire the coordinate information, and move to the target position indicated by the coordinate information. In the visual system, the robot may be compatible with multiple communication protocol formats. After taking the images and analyzing them to acquire coordinate data, different visual devices may send the protocol messages, while the robot may analyze the messages through the corresponding communication protocol formats. The coordinate information is acquired by rapidly analyzing the message, thereby shortening communication time and data processing time of the robot and the visual device, it is in line with production pace, and the technical problem that a moving speed of a robot may not adapt to the production pace because communication protocols compatible with the different visual devices have the diversity in the related art is solved.

According to another aspect of the embodiments of the disclosure, a robot is further provided, including a processor, and a memory, configured to store an executable instruction of the processor, herein, the processor is configured to execute the method for controlling robot as mentioned in any of the above by executing the executable instruction.

The embodiments of disclosure further provide a computer program product. When executed on a data processing device, the computer program product is applicable to initialization of a program including the following method steps: a device type and a communication protocol format of a visual device to be connected are determined, a communication connection with the visual device is established on the basis of the device type and the communication protocol format, a protocol message of the visual device is received, herein, the protocol message may include target coordinate information, and a preset robot is controlled to move to a target position indicated by the target coordinate information.

Optionally, when executed on the data processing device, the computer program product is further applicable to initialization of a program including the following method steps: a device model number of the at least one visual device to be connected is determined on the basis of the device type, a communication request sent by the at least one visual device is received on the basis of the communication protocol format and the device model number, and the communication connection with the visual device is established according to the communication request.

Optionally, when executed on the data processing device, the computer program product is further applicable to initialization of a program including the following method steps: a character string in the protocol message is extracted when the protocol message of the visual device is received, herein, the character string is the one corresponding to a coordinate of motion acquired when the visual device takes at least one image and processes the image, the character string is converted to coordinate data on the basis of the communication protocol format, and a target position that the preset robot needs to achieve and a motion path are determined on the basis of the coordinate data, herein, the motion path is used for indicating that the preset robot moves to the target position.

Optionally, when executed on the data processing device, the computer program product is further applicable to initialization of a program including the following method steps: a moving speed of the preset robot is controlled to be consistent with that of a last robot of a production line after the protocol message of the visual device is received, as to control working pace of the preset robot to be consistent with the production pace of the production line, herein, the working pace is used for indicating that a working speed of the preset robot satisfies a preset working speed.

Optionally, the abovementioned device type may include at least one of: a 2D device type and a 3D device type, and the communication protocol format may include at least one of: a 2D visual communication protocol format and a 3D visual communication protocol format.

Optionally, the abovementioned preset robot may include at least one of the following: a six-axis robot and a four-axis palletizing robot.

The sequence numbers of the embodiments of the abovementioned disclosure are merely used for descriptions and do not represent the strengths and weaknesses of the embodiments.

In the abovementioned embodiments of the disclosure, descriptions of each embodiment are emphasized respectively, and parts which are not elaborated in detail in a certain embodiment may refer to relevant descriptions of other embodiments.

In several embodiments provided by the disclosure, it is to be understood that the disclosed technical contents may be implemented in other manners. Herein, the device embodiments described above are merely illustrative. For example, the division of the units may be a logical function division. In actual implementation, there may be another division manner, for example, multiple units or components may be combined or integrated into another system, or some features may be ignored or not executed. In addition, coupling or direct coupling or communication connection displayed or discussed may be indirect coupling or communication connection between units or modules through some interfaces, and may be electrical or otherwise.

The units described as separate components may or may not be physically separated, and the components displayed as units may or may not be physical units, that is, may be located in one place, or may be distributed to multiple units. Some or all of the units may be selected according to actual needs to achieve an objective of the solution of the embodiments.

In addition, each functional unit in each embodiment of the disclosure may be integrated into one processing unit, or each unit may exist physically separately, or two or more units may be integrated into one unit. The integrated unit may be implemented in the form of hardware or in the form of hardware and software functional units.

The integrated unit may be stored in a computer-readable storage medium if being implemented in the form of a software function unit and sold or used as a standalone product. Based on such understanding, the essence of the technical solution of the disclosure or a part contributing to the conventional art or all or part of the technical solution may be embodied in the form of a software product that is stored in a storage medium, including a plurality of instructions used to cause a computer device (which may be a personal computer, a server, or a network device, etc.) to perform all or part of the steps of the method described in various embodiments of the disclosure. The foregoing storage medium includes: various media capable of storing a program code such as a U disk, a Read-Only Memory (ROM), a Random Access Memory (RAM), a mobile hard disk, a magnetic disk or an optical disc.

The above is only preferred embodiments of the disclosure. It should be pointed out that those of ordinary skill in the art can also make some improvements and modifications without departing from the principle of the disclosure. These improvements and modifications should fall within the scope of protection of the disclosure.

### Industrial Applicability

The solution provided by the embodiments of the disclosure may be used in the field of robot control, and is applicable to household services, industrial production and other environments. In the embodiments of the disclosure, a device type and a communication protocol format of a visual device to be connected are determined first, then a communication connection with the visual device is established on the basis of the device type and the communication protocol format, a protocol message of the visual device is received, and finally a preset robot is controlled to move to a target position indicated by target coordinate information. The preset robot may be compatible with communication formats of multiple visual devices, in this way a coordinate in the protocol message is rapidly analyzed, communication time and data processing time of the robot and the visual device are shortened, and accordingly the robot moves to the target position timely after the analyzing the coordinate information rapidly, as to make motion of the robot be in line with production pace. Thus, the technical problem that a moving speed of a robot may not adapt to the production pace because communication protocols compatible with the different visual devices have the diversity in the related art is solved.

## Claims

1. A method for controlling robot, applied to a preset robot, comprising:
determining a device type and a communication protocol format of a visual device to be connected;
establishing a communication connection with the visual device on the basis of the device type and the communication protocol format;
receiving a protocol message of the visual device, wherein the protocol message comprises target coordinate information; and
controlling the preset robot to move to a target position indicated by the target coordinate information.

2. The control method as claimed in claim 1, wherein establishing the communication connection with the visual device on the basis of the device type and the communication protocol format comprises:
determining a device model number of at least one visual device to be connected on the basis of the device type;
receiving a communication request sent by the at least one visual device on the basis of the communication protocol format and the device model number; and
establishing the communication connection with the visual device according to the communication request.

3. The control method as claimed in claim 1, wherein after receiving the protocol message of the visual device, the control method further comprises:
extracting a character string in the protocol message, wherein the character string is a character string corresponding to a coordinate of motion acquired after the visual device takes at least one image and processes the image;
converting the character string to coordinate data on the basis of the communication protocol format; and
determining a target position that the preset robot needs to achieve and a motion path on the basis of the coordinate data, wherein the motion path is used for indicating that the preset robot moves to the target position.

4. The control method as claimed in claim 1, wherein the control method further comprises:
controlling a moving speed of the preset robot to be consistent with a moving speed of a last robot of a production line after receiving the protocol message of the visual device, as to control working pace of the preset robot to be consistent with production pace of the production line, wherein the working pace is used for indicating that a working speed of the preset robot satisfies a preset working speed.

5. The control method as claimed in any one of claims 1-4, wherein the device type comprises: a 2-dimensional (2D) device type and a 3-dimensional (3D) device type, and the communication protocol format comprises: at least a 2D visual communication protocol format and at least a 3D visual communication protocol format.

6. The control method as claimed in claim 1, wherein the preset robot comprises at least one of the following: a six-axis robot and a four-axis palletizing robot.

7. A method for controlling visual device, applied to at least one visual device that is able to take photos, the control method comprising:
determining a communication protocol format;
establishing a communication connection with a preset robot on the basis of the communication protocol format;
taking at least one image, and determining target coordinate information on the basis of the image;
converting the target coordinate information to acquire a coordinate character string; and
sending a protocol message comprising the coordinate character string to the preset robot, wherein the preset robot moves to a target position indicated by the target coordinate information after analyzing the protocol message.

8. The control method as claimed in claim 7, wherein the communication protocol format comprises: at least a 2-dimensional (2D) visual communication protocol format and a 3-dimensional (3D) visual communication protocol format.

9. A visual system control method, a visual system comprising: at least a preset robot and at least one visual device, the preset robot being compatible with multiple communication protocol formats, the control method comprising:
determining, by the preset robot, a device type and a communication protocol format of a visual device;
establishing, by the preset robot, a communication connection with the at least one visual device on the basis of the device type and the communication protocol format;
taking, by the at least one visual device, an image and analyzing the image, to acquire target coordinate information;
converting, by the at least one visual device, the target coordinate information to acquire a character string, and sending a protocol message comprising the character string to the preset robot;
receiving, by the preset robot, the protocol message of the at least one visual device; and
analyzing, by the preset robot, the protocol message on the basis of the communication protocol format, to acquire the target coordinate information, and moving to a target position indicated by the target coordinate information.

10. A device for controlling robot, applied to a preset robot, comprising:
a first determination unit, configured to determine a device type and a communication protocol format of a visual device to be connected;
a first communication establishment unit, configured to establish a communication connection with the visual device on the basis of the device type and the communication protocol format;
a first receiving unit, configured to receive a protocol message of the visual device, wherein the protocol message comprises target coordinate information; and
a first control unit, configured to control the preset robot to move to a target position indicated by the target coordinate information.

11. A device for controlling visual device, applied to at least one visual device that is able to take photos, the control device comprising:
a second determination unit, configured to determine a communication protocol format;
a second communication establishment unit, configured to establish a communication connection with a preset robot on the basis of the communication protocol format;
a third determination unit, configured to take at least one image, and determine target coordinate information on the basis of the image;
a first conversion unit, configured to convert the target coordinate information to acquire a coordinate character string; and
a first sending unit, configured to send a protocol message including the coordinate character string to the preset robot, wherein the preset robot moves to a target position indicated by the target coordinate information after analyzing the protocol message.

12. A visual system control device, a visual system comprising: at least a preset robot and at least one visual device, the preset robot being compatible with multiple communication protocol formats, the control device comprising:
a fourth determination unit, configured to determine, by the preset robot, a device type and a communication protocol format of a visual device;
a third communication establishment unit, configured to establish, by the preset robot, a communication connection with the at least one visual device on the basis of the device type and the communication protocol format;
an analyzing unit, configured to take, by the at least one visual device, an image and analyze the image, to acquire target coordinate information;
a second sending unit, configured to convert, by the at least one visual device, the target coordinate information to acquire a character string, and send a protocol message including the character string to the preset robot;
a second receiving unit, configured to receive, by the preset robot, the protocol message of the at least one visual device; and
a moving unit, configured to analyze, by the preset robot, the protocol message on the basis of the communication protocol format, to acquire the target coordinate information, and move to a target position indicated by the target coordinate information.

13. A robot, comprising:
a processor; and
a memory, configured to store an executable instruction of the processor, wherein the processor is configured to execute the method for controlling robot according to any one of claims 1-6 by executing the executable instruction.
